(19) Europäisches Patentamt
European Patent Office
Office européen des brevets

(11) EP 4 804 210 A1

(12) EUROPEAN PATENT APPLICATION
published in accordance with Art. 153(4) EPC

(43) Date of publication:
**09.09.2026 Bulletin 2026/37**

(21) Application number: **24885254.3**

(22) Date of filing: **20.08.2024**

(51) International Patent Classification (IPC):
***H01B 1/06*** (2006.01) ***H01B 1/10*** (2006.01)
***H01B 13/00*** (2006.01) ***H01M 4/62*** (2006.01)
***H01M 10/0562*** (2010.01)

(52) Cooperative Patent Classification (CPC):
**H01B 1/06; H01B 1/10; H01B 13/00; H01M 4/62; H01M 10/0562;** Y02E 60/10

(86) International application number:
**PCT/JP2024/029437**

(87) International publication number:
**WO 2025/094477 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.10.2023 JP 2023186279**

(71) Applicant: **TOYOTA JIDOSHA KABUSHIKI KAISHA**
**Toyota-Shi,**
**Aichi-Ken 471-8571 (JP)**

(72) Inventor: **KIDOSAKI, Toru**
**Toyota-shi, Aichi 471-8571 (JP)**

(74) Representative: **TBK**
**Bavariaring 4-6**
**80336 München (DE)**

# (54) SULFIDE SOLID ELECTROLYTE, BATTERY, AND METHOD FOR PRODUCING SULFIDE SOLID ELECTROLYTE

(57) A main object of the present disclosure is to provide a sulfide solid electrolyte capable of inhibiting increase of battery resistance along with charge and discharge cycle.

The present disclosure achieves the object by providing a sulfide solid electrolyte including a Li element, a P element, and a S element, wherein, in a TOF-SIMS analysis, a ratio ($C_X/C_T$) of a total ionic strength ($C_X$) of $PO^{3+}$, $SO_4^{2-}$ and $PSO^+$ with respect to a total ionic strength ($C_T$) of all is 0 or more and less than 9.10 * $10^{-3}$.

[FIG. 1]

10
4
1
3
2
5



Processed by Luminess, 75001 PARIS (FR)

## Description

### Technical Field

The present disclosure relates to a sulfide solid electrolyte, a battery, and a method for producing a sulfide solid electrolyte.

### Background Art

As a solid electrolyte used for a battery, sulfide solid electrolytes have been known. The sulfide solid electrolyte has an advantage such that the ion conductivity is higher compared to that of, for example, an oxide solid electrolyte. Various techniques have been known as methods for synthesizing or atomizing the sulfide solid electrolyte. For example, Patent Document 1 discloses a method for manufacturing sulfide glass ceramics, wherein a sulfide glass is produced by reacting lithium compounds, phosphorus compounds, and halogen compounds in a solvent containing hydrocarbons and ether compounds, and the obtained sulfide glass is heated to produce sulfide glass ceramics.

Patent Document 2 discloses a method for producing a sulfide solid electrolyte having a stable crystalline phase, the method comprising mixing a raw material containing substance including lithium atoms, phosphorus atoms, sulfur atoms, and halogen atoms with at least one kind of lithium oxoacid salt selected from lithium nitrate, lithium nitrite, lithium silicate, lithium borate, and lithium carbonate. Also, Patent Document 3 discloses a method for producing a sulfide solid electrolyte, the method comprising an atomization step where an ether compound is added to coarse-grained material of the sulfide solid electrolyte, and the coarse-grained material is atomized by a grinding process.

### Citation List

#### Patent Documents

Patent Document 1: Japanese Patent Application Laid-Open (JP-A) No. 2017-100907
Patent Document 2: JP-A No. 2023-097070
Patent Document 3: JP-A No. 2013-020894

### Summary

#### Technical Problem

The resistance (internal resistance) of a battery increases when charge and discharge of the battery is repeated. The inventor of the present disclosure has been thoroughly researched about the cause of the increase in battery resistance along with charge and discharge cycle, and obtained a new knowledge that the surface state of the sulfide solid electrolyte gives effect to the increase in resistance.

The present disclosure has been made in view of the above circumstances, and a main object thereof is to provide a sulfide solid electrolyte capable of inhibiting increase of battery resistance along with charge and discharge cycle.

#### Solution to Problem

[1] A sulfide solid electrolyte comprising a Li element, a P element, and a S element, wherein in a TOF-SIMS analysis, a ratio ($C_X/C_T$) of a total ionic strength ($C_X$) of $PO^{3+}$, $SO_4^{2-}$ and $PSO^+$ with respect to a total ionic strength ($C_T$) of all is 0 or more and less than $9.10 * 10^{-3}$.
[2] The sulfide solid electrolyte according to [1], wherein the $C_X/C_T$ is 0 or more and $7.57 * 10^{-3}$ or less.
[3] The sulfide solid electrolyte according to [1] or [2], wherein the $C_X/C_T$ is 0 or more and $6.03 * 10^{-3}$ or less.
[4] The sulfide solid electrolyte according to any one of [1] to [3], wherein a ratio ($C_1/C_T$) of an ionic strength ($C_1$) of the $PO^{3+}$ with respect to the $C_T$ is less than $5.60 * 10^{-4}$.
[5] The sulfide solid electrolyte according to any one of [1] to [4], wherein a ratio ($C_2/C_T$) of an ionic strength ($C_2$) of the $SO_4^{2-}$ with respect to the $C_T$ is less than $2.60 * 10^{-3}$.
[6] The sulfide solid electrolyte according to any one of [1] to [5], wherein a ratio ($C_3/C_T$) of an ionic strength ($C_3$) of the $PSO^+$ with respect to the $C_T$ is less than $5.90 * 10^{-3}$.

[7] The sulfide solid electrolyte according to any one of [1] to [6], wherein the sulfide solid electrolyte includes a crystal phase having a peak at $2\theta = 20.2° \pm 0.5°$ and $23.6° \pm 0.5°$ in an X-ray diffraction measurement using a $CuK\alpha$ ray.
[8] The sulfide solid electrolyte according to any one of [1] to [6], wherein the sulfide solid electrolyte includes an argyrodite type crystal phase.
[9] The sulfide solid electrolyte according to any one of [1] to [6], wherein the sulfide solid electrolyte includes a LGPS type crystal phase.
[10] A battery comprising a cathode layer, an anode layer, and an electrolyte layer arranged between the cathode layer and the anode layer, wherein
at least one of the cathode layer, the anode layer, and the electrolyte layer contains the sulfide solid electrolyte according to any one of [1] to [9].
[11] The battery according to [10], wherein the electrolyte layer contains the sulfide solid electrolyte.
[12] The battery according to [10] or [11], wherein the cathode layer contains a cathode active material including a rock salt layered type active material, and the sulfide solid electrolyte, and
the anode layer contains an anode active material including a Li element, and the sulfide solid electrolyte.
[13] A method for producing a sulfide solid electrolyte, the method comprising:

a first step of preparing a precursor including a Li element, a P element, and a S element, and
a second step of firing the precursor to obtain a sulfide solid electrolyte, wherein
each of the first step and the second step is performed under an environment where an oxygen concentration is less than 254 ppm.

[14] The method for producing the sulfide solid electrolyte according to [13], wherein each of the first step and the second step is performed under an environment where an oxygen concentration is 176 ppm or less.
[15] The method for producing the sulfide solid electrolyte according to [13], wherein each of the first step and the second step is performed under an environment where an oxygen concentration is 98 ppm or less.
[16] The method for producing the sulfide solid electrolyte according to any one of [13] to [15], wherein in the sulfide solid electrolyte, in a TOF-SIMS analysis, a ratio ($C_X/C_T$) of a total ionic strength ($C_X$) of $PO^{3+}$, $SO_4^{2-}$ and $PSO^+$ with respect to a total ionic strength ($C_T$) of all is 0 or more and less than $9.10 * 10^{-3}$.

## Advantageous Effects

The sulfide solid electrolyte in the present disclosure exhibits an effect of inhibiting the increases of battery resistance along with charge and discharge cycle.

## Brief Description of Drawings

[FIG. 1] is a schematic cross-sectional view exemplifying the battery in the present disclosure.
[FIG. 2] is a flow chart exemplifying the method for producing the sulfide solid electrolyte in the present disclosure.
[FIG. 3] is the result of TOF-SIMS analysis for the sulfide solid electrolytes obtained in Examples 1 to 3 and Comparative Examples 1 to 3.
[FIG. 4] is the result of TOF-SIMS analysis for the sulfide solid electrolytes obtained in Examples 4 to 6 and Comparative Examples 4 to 6.
[FIG. 5] is the result of TOF-SIMS analysis for the sulfide solid electrolytes obtained in Examples 7 to 9 and Comparative Examples 7 to 9.
[FIG. 6] is the result of resistance measurements for the batteries obtained in Examples 1 to 3 and Comparative Examples 1 to 3.
[FIG. 7] is the result of resistance measurements for the batteries obtained in Examples 4 to 6 and Comparative Examples 4 to 6.
[FIG. 8] is the result of resistance measurements for the batteries obtained in Examples 7 to 9 and Comparative Examples 7 to 9.

## Description of Embodiments

The sulfide solid electrolyte, the battery, and the method for producing the sulfide solid electrolyte in the present disclosure will be hereinafter explained in details.

A. Sulfide solid electrolyte

The sulfide solid electrolyte in the present disclosure includes a Li element, a P element, and a S element. Also, when a TOF-SIMS analysis is performed to the sulfide solid electrolyte, and when $C_T$ designates the total ionic strength of all, and $C_X$ designates the total ionic strength of $PO^{3+}$, $SO_4^{2-}$, and $PSO^+$, a ratio ($C_X/C_T$) of $C_X$ with respect to $C_T$ is in the specified range.

According to the present disclosure, since the $C_X/C_T$ is in the specified range, the sulfide solid electrolyte can inhibit increase of battery resistance along with charge and discharge cycle. As described above, the resistance of a battery increases when charge and discharge of the battery is repeated. The cause of the increase in battery resistance along with charge and discharge cycle is not just one, but multiple factors are considered. The inventor of the present disclosure has been thoroughly researched about the cause derived from the sulfide solid electrolyte, and obtained a new knowledge that the surface state of the sulfide solid electrolyte gives effect to the increase in resistance.

In specific, when the surface state of the sulfide solid electrolyte is analyzed by TOF-SIMS, he obtained a knowledge that there is no huge difference in the resistance in the initial stage of charge and discharge no matter how much or how little the ratio of the oxide including at least one of P and S. For this reason, it was presumed that there is a possibility the ratio of the oxide does not give influence to the resistance. However, when charge and discharge are repeated, surprisingly, he obtained a knowledge that the ratio of the oxide gives great effect to the resistance. Then, he focused on $PO^{3+}$, $SO_4^{2-}$, and $PSO^+$, of which ionic strength is high among the oxides including at least one of P and S, and the ratios of these were quantitatively evaluated. As a result, it was confirmed that the increase of battery resistance along with charge and discharge cycle can be inhibited when the $C_X/C_T$ is in the specified range.

Here, the TOF-SIMS analysis in the present disclosure will be explained in details. In the present disclosure, $C_T$ designates the total ionic strength (count number) of all detected by the TOF-SIMS, $C_1$ designates the ionic strength of $PO^{3+}$, $C_2$ designates the ionic strength of $SO_4^{2-}$, $C_3$ designates the ionic strength of $PSO^+$, and $C_X$ ($C_X = C_1+C_2+C_3$) designates the total ionic strength of $PO^{3+}$, $SO_4^{2-}$, and $PSO^+$. The peak position (M/Z) of $PO^{3+}$, $SO_4^{2-}$, and $PSO^+$ is respectively 37 (= 111/3), 48 (= 96/2), and 79 (= 79/1).

In the present disclosure, the $C_X/C_T$ is usually 0 or more and less than $9.10 * 10^{-3}$. The $C_X/C_T$ may be $9.00 * 10^{-3}$ or less, may be $7.57 * 10^{-3}$ or less, and may be $6.03 * 10^{-3}$ or less. When the $C_X/C_T$ is too large, it is difficult to sufficiently inhibit the increase of battery resistance along with charge and discharge cycle. Meanwhile, the $C_X/C_T$ may be 0 and may be larger than 0. In the latter case, the $C_X/C_T$ is, for example $1.00 * 10^{-4}$ or more, may be $0.50 * 10^{-3}$ or more, and may be $1.00 * 10^{-3}$ or more.

There are no particular limitations on the $C_1/C_T$ in the present disclosure. The $C_1/C_T$ is, for example, less than $5.60 * 10^{-4}$, may be $5.50 * 10^{-4}$ or less, may be $4.50 * 10^{-4}$ or less, and may be $3.40 * 10^{-4}$ or less. When the $C_1/C_T$ is too large, it is difficult to sufficiently inhibit the increase of battery resistance along with charge and discharge cycle. Meanwhile, the $C_1/C_T$ may be 0 and may be larger than 0. In the latter case, the $C_1/C_T$ is, for example, $1.00 * 10^{-5}$ or more, may be $0.50 * 10^{-4}$ or more, and may be $1.00 * 10^{-4}$ or more.

There are no particular limitations on the $C_2/C_T$ in the present disclosure. The $C_2/C_T$ is, for example, less than $2.60 * 10^{-3}$, may be $2.50 * 10^{-3}$ or less, may be $2.30 * 10^{-3}$ or less, and may be $1.90 * 10^{-3}$ or less. When the $C_2/C_T$ is too large, it is difficult to sufficiently inhibit the increase of battery resistance along with charge and discharge cycle. Meanwhile, the $C_2/C_T$ may be 0 and may be larger than 0. In the latter case, the $C_2/C_T$ is, for example, $0.50 * 10^{-4}$ or more, may be $1.00 * 10^{-4}$ or more, and may be $5.00 * 10^{-4}$ or more.

There are no particular limitations on the $C_3/C_T$ in the present disclosure. The $C_3/C_T$ is, for example, less than $5.90 * 10^{-3}$, may be $5.70 * 10^{-3}$ or less, may be $5.50 * 10^{-3}$ or less, and may be $4.10 * 10^{-3}$ or less. When the $C_3/C_T$ is too large, it is difficult to sufficiently inhibit the increase of battery resistance along with charge and discharge cycle. Meanwhile, the $C_3/C_T$ may be 0 and may be larger than 0. In the latter case, the $C_3/C_T$ is, for example, $1.00 * 10^{-4}$ or more, may be $0.50 * 10^{-3}$ or more, and may be $1.00 * 10^{-3}$ or more.

The ratio of $PO^{3+}$, $SO_4^{2-}$, and $PSO^+$ may be controlled by, for example, appropriately adjusting the oxygen ratio in the storage environment of the starting raw materials, the oxygen concentration of the atmosphere at the time of synthesis, heating temperature, and heating time.

The sulfide solid electrolyte contains at least a Li element, a P element, and a S element. The sulfide solid electrolyte may contain only the Li element, the P element, and the S element, and may contain another element $\alpha$ in addition to the Li element, the P element, and the S element. Examples of the element $\alpha$ may include a halogen element such as a F element, a Cl element, a Br element, and an I element. The sulfide solid electrolyte may contain just one kind of the halogen element, and may contain two kinds or more of the halogen element.

Other examples of the element $\alpha$ may include a Me element (Me is Sn, Si, Ge, Ga, B, Al, Zn, In, Bi, As, or Sb). The sulfide solid electrolyte may contain just one kind of the Me element, and may contain two kinds or more of the Me element. Other examples of the element $\alpha$ may include an O element (oxygen element). In the sulfide solid electrolyte, a part of the S element may be substituted with the O element.

The sulfide solid electrolyte may be a glass ceramic-based sulfide solid electrolyte, may be a crystal-based

sulfide solid electrolyte, and may be a glass-based (amorphous) sulfide solid electrolyte. Among them, the sulfide solid electrolyte is preferably a glass ceramic-based sulfide solid electrolyte or a crystal-based sulfide solid electrolyte. In other words, the sulfide solid electrolyte preferably includes a crystal phase. Examples of the crystal phase may include an argyrodite type crystal phase, a LGPS type crystal phase, and a Thio-LISICON type crystal phase.

The sulfide solid electrolyte may include a crystal phase A having a peak at $2\theta = 20.2° \pm 0.5°$ and $23.6° \pm 0.5°$ in an X-ray diffraction measurement using a CuK$\alpha$ ray. Above all, the sulfide solid electrolyte preferably includes the crystal phase A as a main phase. "Main phase" refers to a crystal phase to which the peak with the highest intensity belongs in the XRD measurement using a CuK$\alpha$ ray. The crystal phase A corresponds to, for example, a high Li ion conductive phase described in JPA No. 2015-011898. The crystal phase A usually includes peaks at $2\theta = 29.4°$, $37.8°$, $41.1°$, and $47.0°$, other than $2\theta = 20.2°$ and $23.6°$. These peak positions may also shift in the range of $\pm 0.5°$. The composition of the sulfide solid electrolyte including the crystal phase A is not particularly limited, but preferably contains the above described elements. Specific examples of the composition of the sulfide solid electrolyte including the crystal phase A may include $xLiI \cdot yLiBr \cdot z(aLi_2S \cdot (1-a)P_2S_5)$. Here, $x + y + z = 100$, $0 \leq x < 100$, $0 \leq y < 100$, $0 < z \leq 100$, and $0.70 \leq a \leq 0.80$. The x may be 0 and may be larger than 0. The x may be 5 or more and may be 10 or more. Also, the x may be 50 or less, and may be 30 or less. Also, the y may be 0 and may be larger than 0. The y may be 5 or more, and may be 10 or more. Also, the y may be 50 or less, and may be 30 or less. The z may be 50 or more, and may be 60 or more. The a may be 0.72 or more, and may be 0.74 or more. Meanwhile, the a may be 0.78 or less, and may be 0.76 or less.

The sulfide solid electrolyte may include an argyrodite type crystal phase. Above all, the sulfide solid electrolyte preferably includes the argyrodite type crystal phase as a main phase. The argyrodite type crystal phase may include a peak at the positions of, for example, $2\theta = 15.3° \pm 0.5°$, $17.7° \pm 0.5°$, $31.1° \pm 0.5°$, $44.9° \pm 0.5°$, and $47.7° \pm 0.5°$, in the XRD measurement using a CuK$\alpha$ ray. The composition of the sulfide solid electrolyte including the argyrodite type crystal phase is not particularly limited, but preferably contains the above described elements. Specific examples of the composition of the sulfide solid electrolyte including the argyrodite type crystal phase may include $(2\text{-}a)Li_2S\text{-}aLiX\text{-}Li_3PS_4$. Here, the X is at least one kind of Cl, Br, and I, and the a may be 0 and may be larger than 0. In the latter case, the a may be 0.5 or more and may be 1.0 or more. Meanwhile, the a is, for example, 1.8 or less.

The sulfide solid electrolyte may include a LGPS type crystal phase. Above all, the sulfide solid electrolyte preferably includes the LGPS type crystal phase as a main phase. The LGPS type crystal phase may include a peak at the positions of, for example, $2\theta = 17.38° \pm 0.50°$, $20.18° \pm 0.50°$, $20.44° \pm 0.50°$, $23.56° \pm 0.50°$, $23.96° \pm 0.50°$, $24.93° \pm 0.50°$, $26.96° \pm 0.50°$, $29.07° \pm 0.50°$, $29.58° \pm 0.50°$, $31.71° \pm 0.50°$, $32.66° \pm 0.50°$, and $33.39° \pm 0.50°$, in the XRD measurement using a CuK$\alpha$ ray. The composition of the sulfide solid electrolyte including the LGPS type crystal phase is not particularly limited, but preferably contains the above described elements. Specific examples of the composition of the sulfide solid electrolyte including the LGPS type crystal phase may include a LiGePS-based composition such as $Li_{10}GeP_2S_{12}$, a LiSiPSCl-based composition such as $Li_{9.54}Si_{1.74}P_{1.44}S_{11.7}Cl_{0.3}$, and a LiSiPSO-based composition such as $Li_{9.42}Si_{1.02}P_{2.1}S_{9.96}O_{2.04}$.

Examples of the shape of the sulfide solid electrolyte may include a granular shape. Also, the average particle size ($D_{50}$) of the sulfide solid electrolyte is, for example, 0.1 $\mu$m or more and 50 $\mu$m or less. The average particle size ($D_{50}$) refers to a volume accumulation particle size obtained by a measurement with a laser diffraction scattering particle distribution measurement method. Use application of the sulfide solid electrolyte is not particularly limited, but preferably used for a battery.

B. Battery

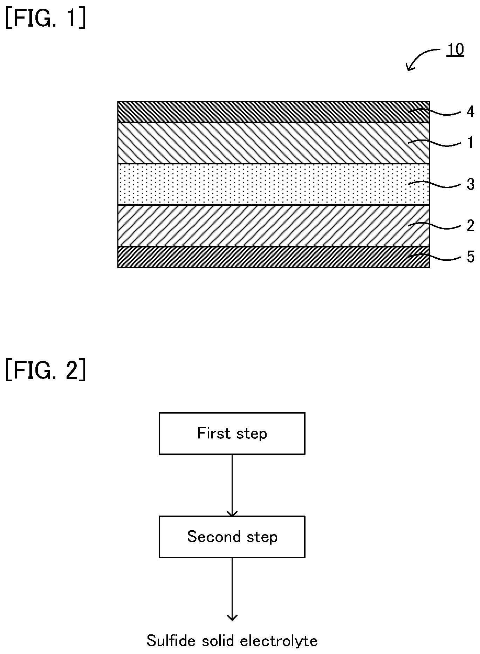

FIG. 1 is a schematic cross-sectional view exemplifying the battery in the present disclosure. Battery 10 shown in FIG. 1 includes cathode layer 1 containing a cathode active material, anode layer 2 containing an anode active material, electrolyte layer 3 arranged between the cathode layer 1 and the anode layer 2, cathode current collector 4 for collecting currents of the cathode layer 1, and anode current collector 5 for collecting currents of the anode layer 2. Further, at least one of the cathode layer 1, the anode layer 2, and the electrolyte layer 3 contains the sulfide solid electrolyte described in "A. Sulfide solid electrolyte" above.

According to the present disclosure, by using the above described sulfide solid electrolyte, a battery capable of inhibiting the increase of battery resistance along with charge and discharge cycle may be achieved.

1. Cathode layer

The cathode layer in the present disclosure contains at least a cathode active material. The cathode layer may contain at least one of an electrolyte, a conductive material, and a binder other than the cathode active material.

Examples of the cathode active material may include an oxide active material. Specific examples of the oxide active material may include a rock salt layered type active material such as $LiCoO_2$, $LiMnO_2$, $LiNiO_2$, $LiVO_2$, $LiNi_{1/3}Co_{1/3}Mn_{1/3}O_2$, and $LiNi_{0.8}Co_{0.15}Al_{0.05}O_2$; a spinel type active material such as $LiMn_2O_4$, and $Li(Ni_{0.5}Mn_{1.5})O_4$; and an olivine type

active material such as $LiFePO_4$, $LiMnPO_4$, $LiNiPO_4$, and $LiCoPO_4$.

The surface of the cathode active material may be coated with a coating layer. The reason therefor is to inhibit the reaction of the cathode active material and the sulfide solid electrolyte. Examples of the material of the coating layer may include a Li ion conductive oxide such as $LiNbO_3$, $Li_3PO_4$, and LiPON. The average thickness of the coating layer is, for example, 1 nm or more and 50 nm or less, and may be 1 nm or more and 10 nm or less.

Examples of the shape of the cathode active material may include a granular shape. The average particle size ($D_{50}$) of the cathode active material is not particularly limited, and for example, it is 10 nm or more, and may be 100 nm or more. Meanwhile, the average particle size ($D_{50}$) of the cathode active material is, for example, 50 μm or less, and may be 20 μm or less.

The cathode layer may contain at least one of an electrolyte, a conductive material, and a binder.
The details of the electrolyte are in the same contents as those described in "3. Electrolyte layer". Above all, the cathode layer preferably contains the sulfide solid electrolyte described in "A. Sulfide solid electrolyte" above. Also, examples of the conductive material may include a carbon material. Examples of the carbon material may include a particulate carbon material such as acetylene black (AB) and Ketjen black (KB), and a fiber carbon material such as carbon fiber, carbon nanotube (CNT), and carbon nanofiber (CNF). Examples of the binder may include a rubber-based binder and a fluoride-based binder. The thickness of the cathode layer is, for example, 0.1 μm or more and 1000 μm or less.

2. Anode layer

The anode layer in the present disclosure contains at least an anode active material. The anode layer may contain at least one of an electrolyte, a conductive material, and a binder other than the anode active material.

Examples of the anode active material may include a metal active material, a carbon active material, and an oxide active material. Examples of the metal active material may include Li, Si, Sn, In, and Al. In particular, the metal active material is preferably a Si-based active material. The reason therefor is to increase capacity of a battery. The Si-based active material is an active material mainly composed of Si. The Si-based active material may be a simple substance of Si, may be a Si alloy, and may be a Si oxide. Also, the Si-based active material may include a diamond type crystal phase, may include a clathrate I type crystal phase, and may include a clathrate II type crystal phase. In the silicon clathrate I type or II type crystal phase, a plurality of Si elements form a polyhedron (cage) including pentagons and hexagons. This polyhedron has a space inside to include metal ions such as Li ions, and thus the volume change due to charge and discharge can be suppressed.

The Si-based active material preferably includes a void inside the primary particle. When there is a void inside the primary particle, the volume change due to charge and discharge can be suppressed. The rate of the void (void rate) in the primary particle is, for example, 4% or more, and may be 10% or more. Meanwhile, the void rate is, for example, 40% or less and may be 20% or less. The void rate can be obtained by, for example, in the following procedures. First, the cross-section of the Si-based active material is observed by a SEM (scanning electron microscope) to obtain a picture of particles. From the obtained picture, a silicon portion and the void portion are distinguished using an image analyzing software, and binarized. The areas of the silicon portion and the void portion are obtained, and the void rate (%) is calculated from the below equation.

Void rate (%) = 100 * (Area of void portion) / ((Area of silicon portion) + (Area of void portion))

Meanwhile, examples of the carbon active material may include graphite, hard carbon, and soft carbon. Also, examples of the oxide active material may include a lithium titanate.

Examples of the shape of the anode active material may include a granular shape. The average particle size ($D_{50}$) of the anode active material is not particularly limited, and for example, it is 10 nm or more, and may be 100 nm or more. Meanwhile, the average particle size ($D_{50}$) of the anode active material is, for example, 50 μm or less, and may be 20 μm or less.

The anode layer may contain at least one of an electrolyte, a conductive material, and a binder.

Details of the electrolyte are in the same contents as those described in "3. Electrolyte layer". Above all, the anode layer preferably contains the sulfide solid electrolyte described in "A. Sulfide solid electrolyte" above. Also, the conductive material and the binder are in the same contents as those described in "1. Cathode layer" above. The thickness of the anode layer is, for example, 0.1 μm or more and 1000 μm or less.

3. Electrolyte layer

The electrolyte layer in the present disclosure is arranged between the cathode layer and the anode layer, and contains at least an electrolyte. The electrolyte may be a solid electrolyte and may be an electrolyte solution (liquid

electrolyte).

Examples of the solid electrolyte may include an inorganic solid electrolyte such as a sulfide solid electrolyte, an oxide solid electrolyte, a nitride solid electrolyte, and a halide solid electrolyte; and an organic polymer electrolyte such as a polymer electrolyte and a gel electrolyte.

The sulfide solid electrolyte is an electrolyte containing a S element as a main component of the anion component. Examples of the sulfide solid electrolyte may include a solid electrolyte containing a Li element, an X element (X is at least one kind of P, As, Sb, Si, Ge, Sn, B, Al, Ga, and In), and a S element. Also, the sulfide solid electrolyte may further contain at least one of an O element and a halogen element. Examples of the halogen element may include a F element, a Cl element, a Br element, and an I element. The sulfide solid electrolyte may be glass (amorphous), and may be a glass ceramic. Above all, the electrolyte layer preferably contains the sulfide solid electrolyte described in "A. Sulfide solid electrolyte" above.

There are no particular limitations on the inorganic solid electrolyte, the organic polymer electrolyte, and an electrolyte solution (liquid electrolyte) other than the sulfide solid electrolyte, and known electrolytes may be used. Also, the thickness of the electrolyte layer is, for example, 0.1 μm or more and 1000 μm or less.

4. Other constitutions

The battery in the present disclosure usually includes a cathode current collector for collecting currents of the cathode active material, and an anode current collector for collecting currents of the anode active material. Examples of the material for the cathode current collector may include SUS, aluminum, nickel, iron, titanium, and carbon. Meanwhile, examples of the material for the anode current collector may include SUS, copper, nickel, and carbon. Also, the battery in the present disclosure may include an outer package for storing an electrode body including the cathode layer, the electrolyte layer, and the anode layer. The electrode body usually further includes a cathode current collector and an anode current collector. Examples of the outer package may include a case type outer package and a laminate type outer package.

The battery in the present disclosure may further include a restraining jig that applies a restraining pressure along with the thickness direction to the electrode body. In particular, when the electrolyte layer is a solid electrolyte layer, it is preferable to apply a restraining pressure to form excellent ion conducting path and electron conducting path. The restraining pressure is, for example, 0.1 MPa or more, may be 1 MPa or more, and may be 5 MPa or more. Meanwhile, the restraining pressure is, for example, 100 MPa or less, may be 50 MPa or less, and may be 20 MPa or less.

5. Battery

The kind of the battery in the present disclosure is not particularly limited, but is typically a lithium ion battery. Also, the battery in the present disclosure may be a liquid battery that contains a liquid electrolyte as the electrolyte layer, and may be an all solid state battery that contains a solid electrolyte layer as an electrolyte layer. Also, the battery in the present disclosure may be a primary battery and may be a secondary battery, but preferably a secondary battery among them. The reason therefor is to be repeatedly charged and discharged and useful as a car-mounted battery for example.

Examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery may be used as a power source for moving bodies other than vehicles (such as rail road transportation, vessel and airplane), and may be used as a power source for electronic products such as information processing equipment.

C. Method for producing sulfide solid electrolyte

FIG. 2 is a flow chart exemplifying the method for producing the sulfide solid electrolyte in the present disclosure. As shown in FIG. 2, in the first step, a precursor including a Li element, a P element, and a S element, is prepared. Next, in the second step, the precursor is fired to obtain a sulfide solid electrolyte. In the present disclosure, each of the first step and the second step is performed under an environment where an oxygen concentration is in the specified range.

According to the present disclosure, since each of the first step and the second step is performed under an environment where an oxygen concentration is in the specified range, the sulfide solid electrolyte capable of inhibiting increase of battery resistance along with charge and discharge cycle can be obtained.

1. First step

The first step in the present disclosure is a step of preparing a precursor including a Li element, a P element, and a

S element. Also, the first step is performed in a space where the oxygen concentration is adjusted. In specific, the first step is performed under an environment where the oxygen concentration is less than 254 ppm. The oxygen concentration may be 176 ppm or less, and may be 98 ppm or less. Also, the first step is preferably performed in an inert atmosphere such as argon.

The precursor may be obtained by, for example, amorphizing a raw material mixture containing a Li raw material, a P raw material, and a S raw material. Examples of the Li raw material may include a sulfide of lithium (such as $Li2_S$) and a simple substance of lithium. Examples of the P raw material may include a sulfide of phosphorus (such as $P_2S_5$, $P_2S_3$) and a simple substance of phosphorus. Examples of the S raw material may include a sulfide of lithium (such as $Li2_S$), a sulfide of phosphorus (such as $P_2S_5$, $P_2S_3$) and a simple substance of sulfur. Also, the raw material mixture may contain another element $\alpha$ in addition to the Li element, the P element, and the S element. The element $\alpha$ is in the same contents as those described in "A. Sulfide solid electrolyte" above.

Also, the Li raw material, the P raw material, and the S raw material preferably have low oxygen concentration in the storage environment. The oxygen concentration of the Li raw material, the P raw material, and the S raw material in the storage environment is, preferably respectively 5 ppm or less. The oxygen concentration of the raw material in the storage environment refers to an oxygen concentration in a storage container. For example, when the raw material is put in the storage container, and there is a space of 1L where oxygen is included in 1 cc, the oxygen concentration in the storage environment of the raw material corresponds to 1 ppm. The oxygen concentration in the storage environment of the raw material can be obtained by GC-TCD (gas chromatograph - thermal conductivity detector) method.

Examples of the method for amorphizing the raw material mixture may include mechanical milling such as ball milling and beads milling. Conditions of the mechanical milling are appropriately selected according to the intended sulfide solid electrolyte.

Meanwhile, the precursor may be obtained by, for example, mixing a raw material mixture containing a Li raw material, a P raw material, and a S raw material in a solvent, and then filtrating thereof. Incidentally, the solvent in the present disclosure is in a broad sense including not only the solvent in a strict sense, but also including a dispersion medium. Examples of the solvent may include tetrahydrofuran (THF). The solvent preferably has low oxygen concentration, and for example, it is preferably 5 ppm or less. The addition amount of the solvent to the raw material mixture in a mass ratio is, for example, 20 times or more, and may be 30 times or more. Meanwhile, the addition amount of the solvent to the raw material mixture in a mass ratio is, for example, 50 times or less and may be 40 times or less.

The method for mixing the raw material mixture and the solvent is not particularly limited, and examples thereof may include a method using a stirrer. The stirring temperature is not particularly limited, and for example, it is 25°C or more, may be 30°C or more, and may be 35°C or more. Meanwhile, the stirring temperature is, for example, 50°C or less and may be 40°C or less. The stirring time is not particularly limited, and for example, it is 48 hours or more, may be 60 hours or more, and may be 72 hours or more. Meanwhile, the stirring time is, for example, 120 hours or less, may be 108 hours or less, and may be 96 hours or less.

2. Second step

The second step in the present disclosure is a step of firing the precursor to obtain a sulfide solid electrolyte. Also, the second step is performed in a space where the oxygen concentration is adjusted. In specific, the second step is performed under an environment where the oxygen concentration is less than 254 ppm. The oxygen concentration may be 176 ppm or less, and may be 98 ppm or less. Also, the second step may be performed in an inert atmosphere such as argon, and may be performed in a reduced pressure atmosphere.

In the second step, the precursor is fired. The firing temperature in the second step based on a crystallization temperature ($T_C$) of the sulfide solid electrolyte is, for example, preferably ($T_C$ - 10°C) or more and ($T_C$ + 50°C) or less. Also, the firing time in the second step is, for example, 1 hour or more, and may be 5 hours or more. Meanwhile, the firing time in the second step is, for example, 12 hours or less, and may be 10 hours or less.

3. Other steps

The method for producing the sulfide solid electrolyte in the present disclosure may include an atomizing step of atomizing the sulfide solid electrolyte obtained in the second step described above. In the atomizing step, the sulfide solid electrolyte is preferably atomized by applying a mechanical energy to the dispersion solution obtained by adding the sulfide solid electrolyte to a dispersion medium. The dispersion medium used in the dispersion solution preferably has low oxygen concentration. Examples of the method for atomizing the sulfide solid electrolyte may include a media type crushing such as beads milling and planetary ball milling, jet crushing, and capitation crushing. Crushing conditions may be appropriately set according to the intended particle size.

4. Sulfide solid electrolyte

There are no particular limitations on the sulfide solid electrolyte obtained through each steps described above, but it is preferably the sulfide solid electrolyte described in "A. Sulfide solid electrolyte" above.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

[Example 1]

A sulfide solid electrolyte was produced using a glove box capable of controlling an oxygen concentration, in the conditions of an argon atmosphere and an oxygen concentration of 98 ppm, and a battery was produced.

<Production of sulfide solid electrolyte>

$Li_2S$, $P_2S_5$, and LiBr were weighed so as to obtain a composition of $10LiI\text{-}15LiBr\text{-}75Li_3PS_4$, and a raw material mixture was obtained. The oxygen concentration of each raw material in the storage environment was respectively 5 ppm or less. This raw material mixture and tetrahydrofuran 20 times of the raw material composition in the mass ratio were put in a container made of glass, and stirred in the conditions of 25°C for 72 hours. After that, a sediment was collected as a precursor of a sulfide solid electrolyte. The collected precursor was dried in the conditions of 25°C and an argon atmosphere, and then fired in the conditions of an atmospheric pressure, 100°C and 1 hour. The obtained fired body was vacuum-sealed in a quartz tube, the quartz tube was placed in a muffle furnace, and fired in the conditions of 140°C and 12 hours, and thereby a sulfide solid electrolyte was obtained. When an X-ray diffraction measurement using a $CuK\alpha$ ray was performed to the obtained sulfide solid electrolyte, it was confirmed that a crystal phase having a peak at $2\theta$ = 20.2° ± 0.5° and 23.6° ± 0.5° was generated.

<Production of battery>

First, a cathode active material ($LiNi_{1/3}Co_{1/3}Mn_{1/3}O_2$) 80.0 g, the produced sulfide solid electrolyte 9.51 g, and a conductive material (VGCF) 2.5 g were weighed and added to a container. Further, a binder solution (solution containing styrene butadiene rubber in a concentration of 5 mass%) and a dispersion medium (tetralin) were added to the container. The solid concentration of the obtained mixture was 69 mass%. The obtained mixture was kneaded using a kneading device (Filmix) to obtain a cathode slurry. The obtained cathode slurry was applied on a surface of a cathode current collector (aluminum foil) in a film shape by a blade coating method using an applicator, and heated in the conditions of 100°C and 30 minutes. Thereby, a cathode including a cathode current collector and a cathode layer was obtained.

Next, an anode active material (Si) 18.6 g, the produced sulfide solid electrolyte 8.69 g, and a conductive material (VGCF) 2.4 g were weighed and added to a container. Further, a binder solution (solution containing styrene butadiene rubber in a concentration of 5 mass%) and a dispersion medium (diisobutyl ketone) were added to the container. The solid concentration of the obtained mixture was 43 mass%. The obtained mixture was kneaded using a kneading device (Filmix) to obtain an anode slurry. A PC wheel for high sharing was used for the kneading device. The obtained anode slurry was applied on a surface of an anode current collector (nickel foil) in a film shape by a blade coating method using an applicator, and heated in the conditions of 100°C and 30 minutes. Thereby, an anode including an anode current collector and an anode layer was obtained.

Next, the produced sulfide solid electrolyte 40 g, a binder solution (hexane solution including acrylate butadiene rubber in a concentration of 5 mass%) 8 g, heptane 25 g and dibutyl ether 8 g were weighed and kneaded by an ultrasonic homogenizer to obtain a slurry for solid electrolyte layer. The obtained slurry was applied on a surface of an aluminum foil in a film shape by a blade coating method using an applicator, and heated in the conditions of 100°C and 30 minutes. Thereby, a transfer member including the aluminum foil and the solid electrolyte layer was obtained.

Next, the cathode and the transfer member were overlapped so that the cathode layer and the solid electrolyte layer faced to each other, and pressed at the pressure of 20 kN to transfer the solid electrolyte layer to the cathode layer side. Similarly, the anode and the transfer member were overlapped so that the anode layer and the solid electrolyte layer faced to each other, and pressed at the pressure of 20 kN to transfer the solid electrolyte layer to the anode layer side. After that, a layered body formed by overlapping the transferred solid electrolyte layers was pressed at the pressure of 4 ton/cm and densified. The densified layered body was laminate-sealed, a restraining pressure of 5 MPa was applied, and thereby a battery (all solid state battery) was obtained. Incidentally, design capacity of the battery was 0.3 Ah.

[Examples 2, 3]

A sulfide solid electrolyte was respectively obtained in the same manner as in Example 1, except that the oxygen concentration was respectively changed to 33 ppm and 12 ppm. A battery was respectively obtained in the same manner as in Example 1 except that the obtained sulfide solid electrolyte was used.

[Comparative Examples 1 to 3]

A sulfide solid electrolyte was respectively obtained in the same manner as in Example 1, except that the oxygen concentration was respectively changed to 342 ppm, 501 ppm, and 254 ppm. A battery was respectively obtained in the same manner as in Example 1 except that the obtained sulfide solid electrolyte was used.

[Example 4]

A battery was obtained in the same manner as in Example 1 except that the production of the sulfide solid electrolyte was changed as below. $Li2_S$, $P_2S_5$, and LiCl were weighed so as to obtain a composition of $Li_2S$-LiCl-$Li_3PS_4$ ($Li_6PS_5Cl$), and a raw material mixture was obtained. The oxygen concentration of each raw material in the storage environment was respectively 5 ppm or less. The obtained raw material mixture was put in a zirconium pot together with zirconium balls, set to a planetary ball milling device (Fritch P-5), and subjected to mechanical milling at rotating speed of 300 rpm for 20 hours, and thereby a precursor was obtained. The obtained precursor was heated under Ar flow atmosphere at 550°C for 6 hours to obtain a sulfide solid electrolyte. When an X-ray diffraction measurement using a CuK$\alpha$ ray was performed to the obtained sulfide solid electrolyte, it was confirmed that an argyrodite type crystal phase was generated.

[Examples 5, 6]

A sulfide solid electrolyte was respectively obtained in the same manner as in Example 4, except that the oxygen concentration was respectively changed to 33 ppm and 12 ppm. A battery was respectively obtained in the same manner as in Example 1 except that the obtained sulfide solid electrolyte was used.

[Comparative Examples 4 to 6]

A sulfide solid electrolyte was respectively obtained in the same manner as in Example 4, except that the oxygen concentration was respectively changed to 342 ppm, 501 ppm, and 254 ppm. A battery was respectively obtained in the same manner as in Example 1 except that the obtained sulfide solid electrolyte was used.

[Example 7]

A battery was respectively obtained in the same manner as in Example 1 except that the production of the sulfide solid electrolyte was changed as below. $Li2_S$, $GeS_2$, and $P_2S_5$ were weighed so as to obtain a composition of $Li_4GeS_4$-$2Li_3PS_4$ ($Li_{10}GeP_2S_{12}$), and a raw material mixture was obtained. The oxygen concentration of each raw material in the storage environment was respectively 5 ppm or less. The obtained raw material mixture was put in a zirconium pot together with zirconium balls, set to a planetary ball milling device (Fritch P-5), and subjected to mechanical milling at rotating speed of 370 rpm for 40 hours, and thereby a precursor was obtained. The obtained precursor was put in a carbon-coated quartz tube and vacuum-sealed. The pressure of the vacuum-sealed quartz tube was approximately 30 Pa. Next, the quartz tube was set in a firing furnace, fired at 550°C for 8 hours, and thereby a sulfide solid electrolyte was obtained. When an X-ray diffraction measurement using a CuK$\alpha$ ray was performed to the obtained sulfide solid electrolyte, it was confirmed that a LGPS type crystal phase was generated.

[Examples 8, 9]

A sulfide solid electrolyte was respectively obtained in the same manner as in Example 7, except that the oxygen concentration was respectively changed to 33 ppm and 12 ppm. A battery was respectively obtained in the same manner as in Example 1 except that the obtained sulfide solid electrolyte was used.

[Comparative Examples 7 to 9]

A sulfide solid electrolyte was respectively obtained in the same manner as in Example 7, except that the oxygen

concentration was respectively changed to 342 ppm, 501 ppm, and 254 ppm. A battery was respectively obtained in the same manner as in Example 1 except that the obtained sulfide solid electrolyte was used.

[Evaluation]

<TOF-SIMS analysis>

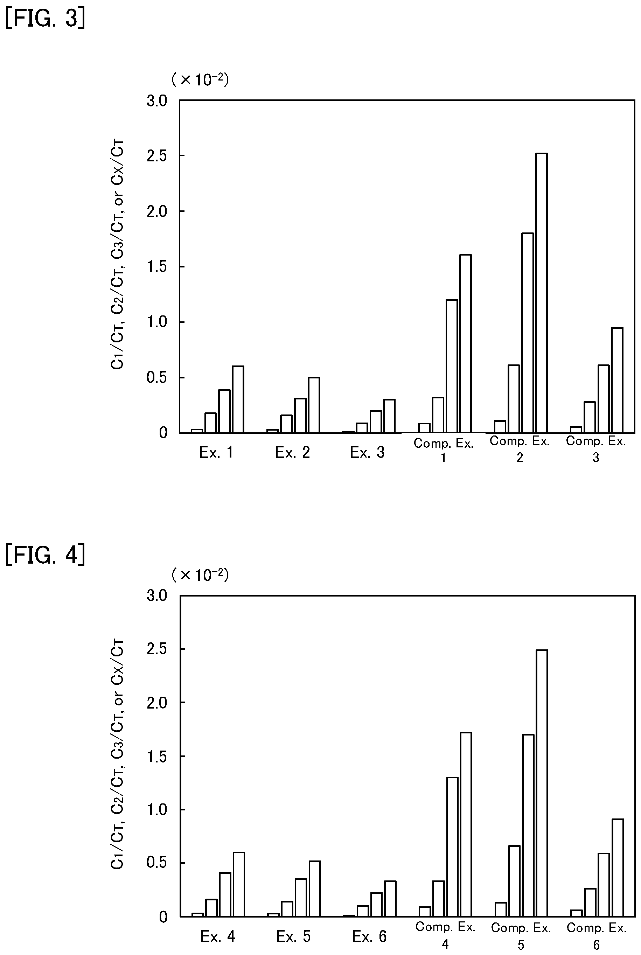

The surface states of the sulfide solid electrolytes obtained in Examples 1 to 9 and Comparative Examples 1 to 9 were measured by TOF-SIMS (Time-of-Flight Secondary Ion Mass Spectrometry). In specific, the powder of the sulfide solid electrolyte was made into pellet, and the measurement was performed using $Bi^{3+}$ as a primary ion, setting an irradiation current value to 0.3 pA and an analysis area to 300 μm. Also, $C_T$ designates the total ionic strength (count number) of all detected, $C_1$ designates the ionic strength of $PO^{3+}$, $C_2$ designates the ionic strength of $SO_4^{2-}$, $C_3$ designates the ionic strength of $PSO^+$, and $C_X$ designates the total of $C_1$, $C_2$, and $C_3$. The results are shown in Table 1 and FIG. 3 to FIG. 5. Incidentally, the bar charts shown in FIG. 3 to FIG. 5 show $C_1/C_T$, $C_2/C_T$, $C_3/C_T$, and $C_X/C_T$ from the left in each group.

[Table 1]

| | Oxygen concentration (ppm) | $C_1/C_T$ | $C_2/C_T$ | $C_3/C_T$ | $C_X/C_T$ |
|---|---|---|---|---|---|
| Example 1 | 98 | $3.30 * 10^{-4}$ | $1.80 * 10^{-3}$ | $3.90 * 10^{-3}$ | $6.03 * 10^{-3}$ |
| Example 2 | 33 | $3.10 * 10^{-4}$ | $1.60 * 10^{-3}$ | $3.10 * 10^{-3}$ | $5.01 * 10^{-3}$ |
| Example 3 | 12 | $1.20 * 10^{-4}$ | $9.00 * 10^{-4}$ | $2.00 * 10^{-3}$ | $3.02 * 10^{-3}$ |
| Example 4 | 98 | $3.00 * 10^{-4}$ | $1.60 * 10^{-3}$ | $4.10 * 10^{-3}$ | $6.00 * 10^{-3}$ |
| Example 5 | 33 | $2.80 * 10^{-4}$ | $1.40 * 10^{-3}$ | $3.50 * 10^{-3}$ | $5.18 * 10^{-3}$ |
| Example 6 | 12 | $1.10 * 10^{-4}$ | $1.00 * 10^{-3}$ | $2.20 * 10^{-3}$ | $3.31 * 10^{-3}$ |
| Example 7 | 98 | $3.40 * 10^{-4}$ | $1.90 * 10^{-3}$ | $3.50 * 10^{-3}$ | $5.74 * 10^{-3}$ |
| Example 8 | 33 | $3.20 * 10^{-4}$ | $1.50 * 10^{-3}$ | $2.90 * 10^{-3}$ | $4.72 * 10^{-3}$ |
| Example 9 | 12 | $1.00 * 10^{-4}$ | $8.00 * 10^{-4}$ | $2.00 * 10^{-3}$ | $2.90 * 10^{-3}$ |
| Comp. Ex. 1 | 342 | $8.60 * 10^{-4}$ | $3.20 * 10^{-3}$ | $1.20 * 10^{-2}$ | $1.61 * 10^{-2}$ |
| Comp. Ex. 2 | 501 | $1.10 * 10^{-3}$ | $6.10 * 10^{-3}$ | $1.80 * 10^{-2}$ | $2.52 * 10^{-2}$ |
| Comp. Ex. 3 | 254 | $5.60 * 10^{-4}$ | $2.80 * 10^{-3}$ | $6.10 * 10^{-3}$ | $9.46 * 10^{-3}$ |
| Comp. Ex. 4 | 342 | $8.90 * 10^{-4}$ | $3.30 * 10^{-3}$ | $1.30 * 10^{-2}$ | $1.72 * 10^{-2}$ |
| Comp. Ex. 5 | 501 | $1.30 * 10^{-3}$ | $6.60 * 10^{-3}$ | $1.70 * 10^{-2}$ | $2.49 * 10^{-2}$ |
| Comp. Ex. 6 | 254 | $6.00 * 10^{-4}$ | $2.60 * 10^{-3}$ | $5.90 * 10^{-3}$ | $9.10 * 10^{-3}$ |
| Comp. Ex. 7 | 342 | $9.00 * 10^{-4}$ | $3.10 * 10^{-3}$ | $1.30 * 10^{-2}$ | $1.70 * 10^{-2}$ |
| Comp. Ex. 8 | 501 | $1.50 * 10^{-3}$ | $5.90 * 10^{-3}$ | $1.50 * 10^{-2}$ | $2.24 * 10^{-2}$ |
| Comp. Ex. 9 | 254 | $6.10 * 10^{-4}$ | $3.00 * 10^{-3}$ | $6.30 * 10^{-3}$ | $9.91 * 10^{-3}$ |

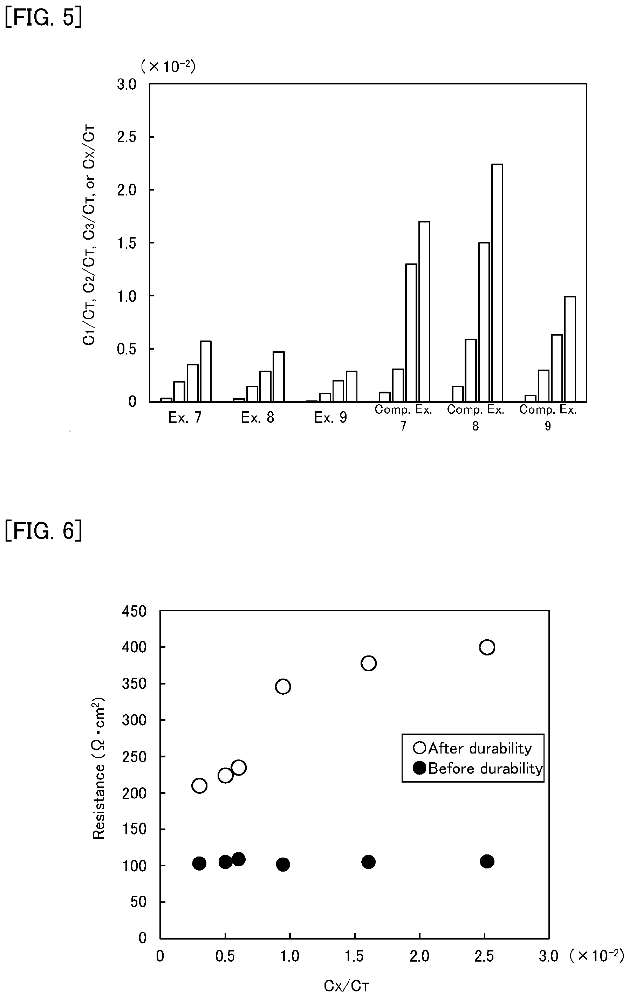

As shown in Table 1 and FIG. 3, it was confirmed that the values of $C_X/C_T$ in Examples 1 to 3 were smaller compared to those of Comparative Examples 1 to 3. Also, in Examples 1 to 3, all values of $C_1$, $C_2$, and $C_3$ were small. In contrast, in Comparative Examples 1 to 3, all values of $C_1$, $C_2$ and $C_3$ were large. In particular, it was confirmed that the $C_3$ (ionic strength of $PSO^+$) was easily influenced by an oxygen. Also, as shown in FIG. 4 and FIG. 5, similar tendency was confirmed in the relation of Examples 4 to 6 and Comparative Examples 4 to 6, and in the relation of Examples 7 to 9 and Comparative Examples 7 to 9.

<Ion conductivity measurement>

The ion conductivity of the sulfide solid electrolytes obtained in Examples 1 to 9 and Comparative Examples 1 to 9 was measured. First, two pieces of aluminum foils subjected to carbon coating were overlapped, pressed at a pressure of 6 tom/cm$^2$ (59 kN), restrained at 6 N·m, and in that state, the thickness was measured. Also, a macole cell was restrained at 6 N·m, and the thickness was measured. These thicknesses were used as blanks. Next, 150 mg of sulfide solid electrolyte powder was put in a cell for powder compression, and pressed in the conditions of 1 ton/cm$^2$ and 30 seconds. Aluminum

foils subjected to carbon coating were arranged on both surfaces of the obtained compression powder body, and pressed in the conditions of 6 tom/$cm^2$ and 30 seconds. After that, the cell was restrained at 6 N·m, the thickness was measured, and then the cell was sealed in a desiccator together with a molecular cube. After that, an impedance measurement was performed by an electrochemical measurement device (Solartron) in the conditions of, frequency: 0.1 Hz to $10^6$ Hz, amplitude: 10 mV, and temperature: 25°C, and an ion conductivity was obtained. The results are shown in Table 2.

<Resistance measurement>

The resistance measurement was performed using the batteries obtained in Examples 1 to 9 and Comparative Examples 1 to 9. First, the batteries were charged until 4.55 V, and then adjusted to 2.5 V by discharging, and from that voltage, discharged at 1.7 C, and the resistance (resistance before durability) was obtained from the voltage change in 10 seconds and current value. After that, CCCV charge and discharge was performed for 1000 cycles in the conditions of, upper limit voltage: 4.55 V, lower limit voltage: 2.5 V, and rate: 0.1 C. The resistance after 1000 cycles (resistance after durability) was obtained in the same manner as the above. The results are shown in Table 2 and FIG. 6 to FIG. 8.

[Table 2]

| | Ion conductivity ($10^{-3}$ mS/cm) | Resistance before durability (Ω • $cm^2$) | Resistance after durability (Ω • $cm^2$) |
|---|---|---|---|
| Example 1 | 4.1 | 109 | 235 |
| Example 2 | 4.1 | 105 | 224 |
| Example 3 | 4.1 | 103 | 210 |
| Example 4 | 4.3 | 109 | 232 |
| Example 5 | 4.3 | 105 | 215 |
| Example 6 | 4.3 | 103 | 211 |
| Example 7 | 5.1 | 107 | 241 |
| Example 8 | 5.1 | 106 | 224 |
| Example 9 | 5.1 | 107 | 209 |
| Comp. Ex. 1 | 4.1 | 105 | 378 |
| Comp. Ex. 2 | 4.1 | 106 | 400 |
| Comp. Ex. 3 | 4.1 | 102 | 346 |
| Comp. Ex. 4 | 4.3 | 103 | 382 |
| Comp. Ex. 5 | 4.3 | 106 | 404 |
| Comp. Ex. 6 | 4.3 | 100 | 352 |
| Comp. Ex. 7 | 5.1 | 111 | 375 |
| Comp. Ex. 8 | 5.1 | 109 | 410 |
| Comp. Ex. 9 | 5.1 | 106 | 352 |

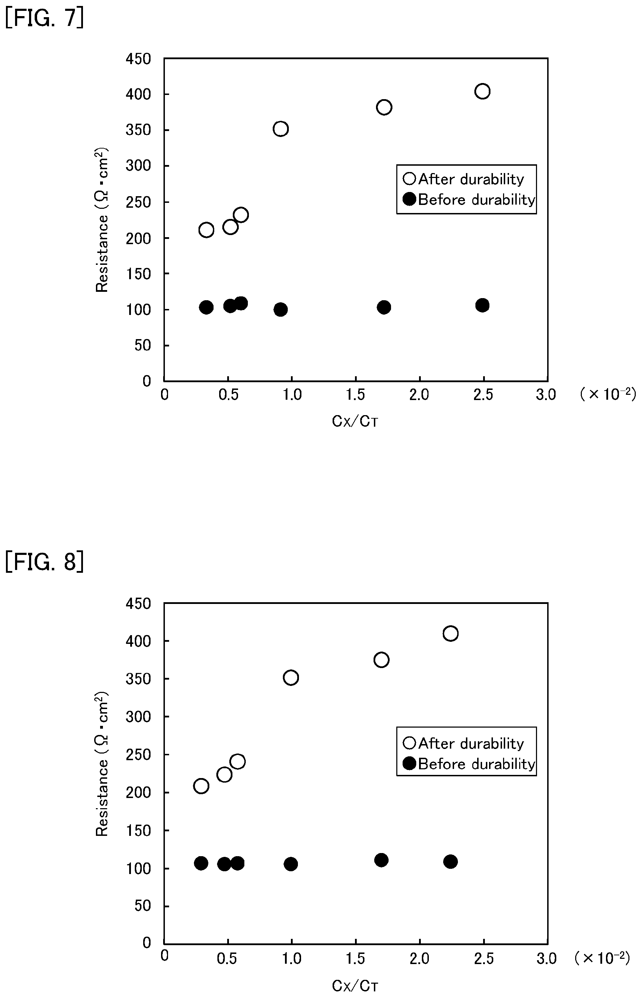

As shown in Table 2 and FIG. 6, in Examples 1 to 3 and Comparative Examples 1 to 3, both of the ion conductivity and the battery resistance before durability were about the same. In other words, it was confirmed that the influence of the surface state of the sulfide solid electrolyte given to the battery resistance before durability was small. In contrast, as shown in Table 2 and FIG. 6, regarding the battery resistance after durability, it was confirmed that the resistance in Examples 1 to 3 was greatly reduced compared to the resistance in Comparative Examples 1 to 3. In this manner, it was confirmed that the increase in battery resistance along with charge and discharge cycle was inhibited by using the sulfide solid electrolyte of which $C_X/C_T$ was adjusted to the specified range. Also, as shown in FIG. 7 and FIG. 8, similar tendency was confirmed in the relation of Examples 4 to 6 and Comparative Examples 4 to 6, and in the relation of Examples 7 to 9 and Comparative Examples 7 to 9.

Reference Signs List

1 cathode layer
2 anode layer
3 electrolyte layer
4 cathode current collector
5 anode current collector
10 battery

## Claims

**1.** A sulfide solid electrolyte comprising a Li element, a P element, and a S element, wherein in a TOF-SIMS analysis, a ratio ($C_X/C_T$) of a total ionic strength ($C_X$) of $PO^{3+}$, $SO_4^{2-}$ and $PSO^+$ with respect to a total ionic strength ($C_T$) of all is 0 or more and less than 9.10 * $10^{-3}$.

**2.** The sulfide solid electrolyte according to claim 1, wherein the $C_X/C_T$ is 0 or more and 7.57 * $10^{-3}$ or less.

**3.** The sulfide solid electrolyte according to claim 1, wherein the $C_X/C_T$ is 0 or more and 6.03 * $10^{-3}$ or less.

**4.** The sulfide solid electrolyte according to claim 1, wherein a ratio ($C_1/C_T$) of an ionic strength ($C_1$) of the $PO^{3+}$ with respect to the $C_T$ is less than 5.60 * $10^{-4}$.

**5.** The sulfide solid electrolyte according to claim 1, wherein a ratio ($C_2/C_T$) of an ionic strength ($C_2$) of the $SO_4^{2-}$ with respect to the $C_T$ is less than 2.60 * $10^{-3}$.

**6.** The sulfide solid electrolyte according to claim 1, wherein a ratio ($C_3/C_T$) of an ionic strength ($C_3$) of the $PSO^+$ with respect to the $C_T$ is less than 5.90 * $10^{-3}$.

**7.** The sulfide solid electrolyte according to claim 1, wherein the sulfide solid electrolyte includes a crystal phase having a peak at $2\theta = 20.2° \pm 0.5°$ and $23.6° \pm 0.5°$ in an X-ray diffraction measurement using a CuK$\alpha$ ray.

**8.** The sulfide solid electrolyte according to claim 1, wherein the sulfide solid electrolyte includes an argyrodite type crystal phase.

**9.** The sulfide solid electrolyte according to claim 1, wherein the sulfide solid electrolyte includes a LGPS type crystal phase.

**10.** A battery comprising a cathode layer, an anode layer, and an electrolyte layer arranged between the cathode layer and the anode layer, wherein
at least one of the cathode layer, the anode layer, and the electrolyte layer contains the sulfide solid electrolyte according to any one of claim 1 to claim 9.

**11.** The battery according to claim 10, wherein the electrolyte layer contains the sulfide solid electrolyte.

**12.** The battery according to claim 10, wherein

the cathode layer contains a cathode active material including a rock salt layered type active material, and the sulfide solid electrolyte, and
the anode layer contains an anode active material including a Li element, and the sulfide solid electrolyte.

**13.** A method for producing a sulfide solid electrolyte, the method comprising:

a first step of preparing a precursor including a Li element, a P element, and a S element, and
a second step of firing the precursor to obtain a sulfide solid electrolyte, wherein
each of the first step and the second step is performed under an environment where an oxygen concentration is less than 254 ppm.

**14.** The method for producing the sulfide solid electrolyte according to claim 13, wherein each of the first step and the second step is performed under an environment where an oxygen concentration is 176 ppm or less.

**15.** The method for producing the sulfide solid electrolyte according to claim 13, wherein each of the first step and the second step is performed under an environment where an oxygen concentration is 98 ppm or less.

**16.** The method for producing the sulfide solid electrolyte according to claim 13, wherein in the sulfide solid electrolyte, in a TOF-SIMS analysis, a ratio ($C_X/C_T$) of a total ionic strength ($C_X$) of $PO^{3+}$, $SO_4^{2-}$ and $PSO^+$ with respect to a total ionic strength ($C_T$) of all is 0 or more and less than 9.10 * $10^{-3}$.

[FIG. 1]

10
4
1
3
2
5

[FIG. 2]

First step
Second step
Sulfide solid electrolyte

[FIG. 3]

(×10⁻²)
3.0
2.5
2.0
1.5
1.0
0.5
0
$C_1/C_T$, $C_2/C_T$, $C_3/C_T$, or $C_X/C_T$
Ex. 1
Ex. 2
Ex. 3
Comp. Ex. 1
Comp. Ex. 2
Comp. Ex. 3

[FIG. 4]

(×10⁻²)
3.0
2.5
2.0
1.5
1.0
0.5
0
$C_1/C_T$, $C_2/C_T$, $C_3/C_T$, or $C_X/C_T$
Ex. 4
Ex. 5
Ex. 6
Comp. Ex. 4
Comp. Ex. 5
Comp. Ex. 6

[FIG. 5]

(×10⁻²)
3.0
2.5
2.0
1.5
1.0
0.5
0
C1/CT, C2/CT, C3/CT, or CX/CT
Ex. 7
Ex. 8
Ex. 9
Comp. Ex. 7
Comp. Ex. 8
Comp. Ex. 9


[FIG. 6]

450
400
350
300
250
200
150
100
50
0
Resistance (Ω・cm²)
After durability
Before durability
0
0.5
1.0
1.5
2.0
2.5
3.0
(×10⁻²)
CX/CT

[FIG. 7]

450
400
350
300
250
200
150
100
50
0
Resistance (Ω・cm²)
0
0.5
1.0
1.5
2.0
2.5
3.0
(×10⁻²)
Cx/CT
After durability
Before durability

[FIG. 8]

450
400
350
300
250
200
150
100
50
0
Resistance (Ω・cm²)
0
0.5
1.0
1.5
2.0
2.5
3.0
(×10⁻²)
Cx/CT
After durability
Before durability

## INTERNATIONAL SEARCH REPORT

International application No. **PCT/JP2024/029437**

**A. CLASSIFICATION OF SUBJECT MATTER**

***H01B 1/06***(2006.01)i; ***H01B 1/10***(2006.01)i; ***H01B 13/00***(2006.01)i; ***H01M 4/62***(2006.01)i; ***H01M 10/0562***(2010.01)i
FI: H01B1/06 A; H01M10/0562; H01M4/62 Z; H01B1/10; H01B13/00 Z

According to International Patent Classification (IPC) or to both national classification and IPC

**B. FIELDS SEARCHED**

Minimum documentation searched (classification system followed by classification symbols)

H01B1/06; H01B1/10; H01B13/00; H01M4/62; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/145657 A1 (AGC INC.) 03 August 2023 (2023-08-03) entire text, all drawings | 1-16 |
| A | WO 2021/065227 A1 (FURUKAWA CO., LTD.) 08 April 2021 (2021-04-08) entire text, all drawings | 1-16 |
| A | WO 2018/164224 A1 (IDEMITSU KOSAN CO., LTD.) 13 September 2018 (2018-09-13) entire text, all drawings | 1-16 |
| A | WO 2022/009810 A1 (MITSUI MINING & SMELTING CO., LTD.) 13 January 2022 (2022-01-13) entire text, all drawings | 1-16 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/029437**

| Patent document cited in search report | Publication date (day/month/year) | Patent family member(s) | Publication date (day/month/year) |
|---|---|---|---|
| WO 2023/145657 A1 | 03 August 2023 | (Family: none) | |
| WO 2021/065227 A1 | 08 April 2021 | US 2022/0339700 A1<br>entire text, all drawings<br>EP 4039657 A1<br>CN 114423526 A<br>KR 10-2022-0059954 A | |
| WO 2018/164224 A1 | 13 September 2018 | US 2020/0006808 A1<br>entire text, all drawings | |
| WO 2022/009810 A1 | 13 January 2022 | US 2023/0343996 A1<br>entire text, all drawings<br>EP 4180387 A1<br>KR 10-2023-0008211 A<br>CN 115734942 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017100907 A
- JP 2023097070 A
- JP 2013020894 A